# EUROPÄISCHE PATENTSCHRIFT

(11) **EP 2 545 014 B1**
(45) Veröffentlichungstag und Bekanntmachung des Hinweises auf die Patenterteilung: **11.07.2018**
(21) Anmeldenummer: 11709663.6
(22) Anmeldetag: 07.03.2011
(51) Int. Cl.: C04B 24/32, C04B 28/06, C04B 28/16, C04B 103/10

(54) **ZEMENTBESCHLEUNIGER**
CEMENT ACCELERATOR
ACCÉLÉRATEUR DE PRISE POUR CIMENT

(30) Priorität: 09.03.2010 EP 10155940
(43) Veröffentlichungstag der Anmeldung: 16.01.2013
(73) Patentinhaber: Construction Research & Technology GmbH, 83308 Trostberg (DE)
(72) Erfinder: FRENKENBERGER, Karl, 86507 Oberottmarshausen (DE); KOEHLER, Stefan, 86356 Neusäß-Steppach (DE); HEICHELE, Thomas, 86399 Bobingen (DE); HOETZL, Klaus-Dieter, 86199 Augsburg (DE); WEISS, Patrick, 86199 Augsburg (DE); DREßEN, Alexander, 86150 Augsburg (DE)
(74) Vertreter: BASF IP Association
(86) Internationale Anmeldenummer: PCT/EP2011/053349
(87) Internationale Veröffentlichungsnummer: WO 2011/110509

(56) Entgegenhaltungen:
- EP-A1- 0 403 974
- EP-A1- 0 637 574
- EP-A1- 2 325 231
- EP-A2- 0 518 156
- EP-A2- 1 491 516
- DE-A1-102005 001 101
- DE-A1-102005 051 375

## Beschreibung

Die vorliegende Erfindung betrifft ein anorganisches Bindmittelsystem enthaltend a) Calcium-Silikat-Zement, b) Calcium-Aluminat-Zement und c) mindestens ein dreifach funktionelles Polyalkylenglykol, welches pro Molekül drei Hydroxylgruppen aufweist und ein gewichtsmittleres Molekulargewicht zwischen 100 und 20000 besitzt sowie die Verwendung mindestens eines Polyalkylenglykols als Beschleuniger für ein derartiges zementäres System.

Erstarrungsbeschleuniger werden insbesondere dann verwendet, wenn anorganische Bindmittelsysteme bei tiefen Temperaturen nahe der Frostgrenze eingesetzt werden sollen. Die Hydratationsrate, beispielsweise von Portlandzement, ist sehr temperaturabhängig und bei tieferen Temperaturen stark verringert. Wird bei diesen Temperaturen eine zufriedenstellende Festigkeitsentwicklung von z. B. Beton oder Mörtel verlangt, müssen Maßnahmen zur Beschleunigung der Hydratation ergriffen werden. Möglichkeiten hierzu bestehen in der Erhöhung des Zementanteils, der Erwärmung des Betons oder Mörtels oder der Verwendung von chemischen Substanzen zur Erstarrungsbeschleunigung. Verschiedene Erstarrungsbeschleuniger sind allgemein bekannt. Dazu zählen Alkalihydroxide, Silikate, Fluorosilikate, Calciumformiat, Natriumchlorid, Calciumchlorid sowie Ca-Nitrat und -Nitrit.

Eine weitere Möglichkeit um eine schnelle Festigkeitsentwicklung zu erreichen, ist die Verwendung eines Bindemittelgemisches enthaltend Calcium-Silikat-Zement und Calcium-Aluminat-Zement, wobei es sich insbesondere um Portlandzement (PZ) und Tonerdezement (TZ) handeln kann. Derartige Bindemittelsysteme werden insbesondere dann eingesetzt, wenn ein schneller Baufortschritt und damit verbunden eine schnelle Erhärtung erreicht werden soll. Bindemittelgemische enthaltend Calcium-Silikat-Zement, Calcium-Aluminat-Zement und zusätzlich Calciumsulfat zeigen zudem eine schnelle Trocknung und somit geringe Restfeuchte und gute Raumbeständigkeit; die Wasserbeständigkeit wird aber stark herabgesetzt. Daher eignet sich dieses Bindemittel bevorzugt für schnellhärtende Baumassen, die für den Innenbereich vorgesehen sind. Die schnelle Reaktion mit Wasser führt in kurzer Zeit zu einem geringen Wassergehalt der hergestellten Produkte, wobei diese relativ raumbeständig sind. So kann z. B. bei Verwendung als Estrichmasse oder Spachtelmasse eine schnelle Belegereife erreicht werden, da der so hergestellte Estrich oder die Spachtelmasse bereits nach kurzer Zeit begehbar ist, geschliffen werden kann und aufgrund der geringen Restfeuchte und hohen Festigkeit auch mit einem Oberflächenmaterial wie Textilbelägen, Kunststoffbelägen oder auch Fliesen und Platten belegt werden kann.

Derartige Systeme liegen in der Regel als Werktrockenmörtel vor. Hierbei handelt es sich um gebrauchsfertige, pulverförmige Mörtelmischungen, die vor Ort, also kurz vor der Anwendung auf der Baustelle mit Wasser zu Mörtel gemischt werden. Werktrockenmörtel bestehen aus Bindemitteln, Füllstoffen und weiteren Bestandteilen, wie beispielsweise Abbindereglern, rheologischen Additiven, Wasserretentionsmitteln und Verlaufsmitteln. Derartige Werktrockenmörtel werden im Allgemeinen in großen Mischanlagen gemischt und anschließend bevorzugt in Papiersäcken abgefüllt und bis zum Gebrauch darin gelagert.

So ist beispielsweise aus der DE 35 27 981 eine Mischung zur Herstellung schnellhärtender Mörtel und Putze bekannt, die als wesentliche Bindemittelbestandteile reaktive Calciumsilikate, reaktive Aluminate, Calciumhydroxid und Calciumsulfathalbhydrat/Calciumsulfatanhydrit II enthalten.

Aus der DE 10 2005 001 101 ist eine Trockenmischung bekannt, welche Portlandkalksteinzement, Aluminatzement und Calciumsulfat in Kombination mit Eisensulfat und/oder Aluminiumsulfat enthält.

Weiterhin beansprucht die DE 43 42 407 ein hydraulisches Bindemittel, enthaltend eine Mischung aus eisenhaltigem Tonerdezement, Calciumsulfat und Portlandzement in einem bestimmten Mischungsverhältnis zueinander.

DE 197 24 700 betrifft eine Spachtelmasse auf Basis eines hydraulischen Bindemittels u. a. dadurch gekennzeichnet, dass diese 0,1 bis 6 Gew.-% Weißzement, 0,1 bis 3 Gew.-% Kalkhydrat, 5 bis 45 Gew.-% Tonerdezement sowie 2 bis 18 Gew.-% Calciumsulfat enthält.

Diese Bindemittel-Abmischungen zeigen ein sehr schnelles Abbindeverhalten. Zur Steuerung des Abbindeverhaltens können diesen Systemen noch Verzögerer und Beschleuniger zugesetzt werden. Die Verzögerer dienen zur Einstellung der Verarbeitungs- oder Topfzeit; die Beschleuniger werden zur Erhöhung der Festigkeitsentwicklung nach Ende der Topfzeit zugesetzt.

Nach wie vor ein Problem dieser Systeme auf Basis von Calcium-Silikat-Zement und Calcium-Aluminat-Zement und ggf. Caciumsulfat ist die Erzielung einer möglichst gleichbleibenden Topfzeit und Festigkeitentwicklung sowohl bei hohen Temperaturen, insbesondere zwischen 20 und 30 °C, als auch bei tiefen Temperaturen, insbesondere zwischen 15 und 5 °C. Als Richtwert für solche schnellabbindenden Fertigmörtel sollte die Topfzeit für eine gute Verarbeitbarkeit zwischen 15 und 90 Minuten liegen. Ist die Topfzeit für derartige Systeme nach dem Stand der Technik bei niedrigen Temperaturen akzeptabel, z.B. bei 5°C und die Festigkeitsentwicklung genügend schnell, dann wird die Topfzeit bei höheren Temperaturen zu kurz, z.B. bei 30°C.

Aufgabe der vorliegenden Erfindung war es deshalb, ein anorganisches Bindemittelsystem enthaltend Calcium-Silikat-Zement, Calcium-Aluminat-Zement und ggf. Calciumsulfat zur Verfügung zu stellen, welches bei tiefen Temperaturen, insbesondere zwischen 5 und 15 °C, eine optimale Erstarrung und Festigkeitsentwicklung besitzt und gleichzeitig bei hohen Temperaturen, insbesondere zwischen 20 und 30°C noch eine ausreichende lange Verarbeitungszeit aufweist.

Es war weiterhin eine Aufgabe dieser Erfindung einen Werktrockenmörtel enthaltend Calcium-Silikat-Zement, Calcium-Aluminat-Zement und ggf. Calciumsulfat zur Verfügung zu stellen, welcher bei der Verarbeitung sowohl bei Raumtemperatur als auch bei niedrigen Temperaturen, insbesondere unterhalb von 10 °C, eine nahezu gleichbleibende Topfzeit und Festigkeitsentwicklung aufweist.

Gelöst wurde diese Aufgabe durch ein anorganisches Bindemittelsystem enthaltend a) Calcium-Silikat-Zement, b) Calcium-Aluminat-Zement, c) mindestens ein dreifach funktionelles Polyalkylenglykol, welches pro Molekül drei Hydroxylgruppen aufweist und ein gewichtsmittleres Molekulargewicht zwischen 100 und 20000 besitzt und ggf. d) Calciumsulfat, wobei es sich bei dem anorganischen Bindemittelsystem um einen Werktrockenmörtel handelt.

Überraschenderweise hat sich herausgestellt, dass Polyalkylenglykole bei Systemen enthaltend Calcium-Silikat-Zement, Calcium-Aluminat-Zement und ggf. Calciumsulfat bei tiefen Temperaturen als Beschleuniger wirken. Besonders überraschend war hierbei, dass die Verarbeitungszeit eines solchen Systems bei hohen Temperaturen durch die Zugabe des erfindungsgemäßen Beschleunigers nur unwesentlich verändert wird.

Bei dem Calcium-Silikat-Zement der Komponente a) handelt es sich insbesondere um Portlandzement. Zudem können auch latent hydraulische Bindemittel, beispielsweise Puzzolane, wie Metakaolin, Calciummetasilikat und/oder vulkanische Schlacke, vulkanischer Tuff, Flugasche, Hochofenschlacke, Trass und/oder Mikrosilikat ggf. zusammen mit einer Calciumquelle, wie Calciumhydroxid und/oder Zement eingesetzt werden. Was den Calcium-Silikat-Zement anbelangt, so kann die Menge in dem erfindungsgemäßen System in weiten Bereichen variiert werden. Im Allgemeinen liegt die Menge an Calcium-Silikat-Zement im Bereich von 10 bis 30 Gew.-%, insbesondere 10 bis 25 Gew.-%, bevorzugt 10 bis 20 Gew.-%, bezogen auf das erfindungsgemäße System. Dennoch kann es einzelfallbedingt oder anwendungstechnisch erforderlich sein, von den vorgenannten Mengen abzuweichen.

Bei dem Calcium-Aluminat-Zement der Komponente b) handelt es sich insbesondere um Tonerdezement oder Tonerdeschmelzzement. Was den Calcium-Aluminat-Zement anbelangt, so kann die Menge in dem erfindungsgemäßen System in weiten Bereichen variiert werden. Im Allgemeinen liegt die Menge an Calcium-Aluminat-Zement im Bereich von 1 bis 10 Gew.-%, insbesondere 1 bis 8 Gew.-%, bevorzugt 1 bis 4 Gew.-%, bezogen auf das erfindungsgemäße System. Dennoch kann es einzelfallbedingt oder anwendungstechnisch erforderlich sein, von den vorgenannten Mengen abzuweichen. Besonders gute Ergebnisse werden erhalten, wenn ein Calcium-Aluminat-Zement mit einer spezifischen Oberfläche nach Blaine von 2.000 bis 4.000 cm²/g, insbesondere 2.500 bis 3.750 cm²/g, bevorzugt 2.750 bis 3.500 cm²/g, eingesetzt wird.

Im Gegensatz zu Calcium-Silikat-Zement setzt der Calcium-Aluminat-Zement bei der Hydratation keinen Kalk frei; diese Eigenschaften sowie seine geringe Porosität gibt bauchemischen Formulierungen wie Spachtel-, Estrich- oder Bodenausgleichsmassen eine gute chemische Widerstandfähigkeit und vermeidet Ausblühungen. Insbesondere wirkt der eingesetzte Calcium-Aluminat-Zement im Rahmen des erfindungsgemäßen Systems unter anderem als ein Abbinde- und Erhärtungsbeschleuniger, so dass eine Mischung resultiert, die sich bei einer Temperatur zwischen 20 und 30°C durch eine hohe Schnelligkeit bei der Hydratation auszeichnet. Ein erfindungsgemäß bevorzugt eingesetzter Calcium-Aluminat-Zement weist, jeweils bezogen auf den Calcium-Aluminat-Zement und jeweils bestimmt nach DIN EN 196-2:1994, 35 bis 41 Gew.-% CaO, 1 bis 6 Gew.-% SO₂, 35 bis 45 Gew.-% Al₂O₃ und 12 bis 19 Gew.-% Fe₂O₃ auf.

Insbesondere handelt es sich bei dem dreifach funktionellen Polyalkylenglycol um Polyethylenglycol, Polypropylenglycol und/oder Polytetramethylenglycol, bevorzugt auf Basis von Trimethylolpropan oder Glycerin. Im Allgemeinen liegt die Menge an dreifach funktionellen Polyalkylenglycol im Bereich von 0,05 bis 5 Gew.-%, insbesondere 0,1 bis 2 Gew.-%, bevorzugt 0,5 bis 1,5 Gew.-%, bezogen auf das erfindungsgemäße System. Dennoch kann es einzelfallbedingt oder anwendungstechnisch erforderlich sein, von den vorgenannten Mengen abzuweichen.

Die optional enthaltene Calciumsulfat-Komponente d), liegt vorzugsweise in hydratisierter Form, insbesondere in Form des Calciumsulfathalbhydrats oder Anhydrits, vor. Auch die Menge an eingesetztem Calciumsulfat in dem erfindungsgemäßen System kann in weiteren Bereichen variiert werden. Im Allgemeinen liegt die Menge an Calciumsulfat im Bereich von 0 bis 20 Gew.-%, insbesondere 2 bis 15 Gew.-%, bevorzugt 3 bis 8 Gew.-%, bezogen auf das erfindungsgemäße System. Besonders gute Ergebnisse werden erhalten, wenn ein Calciumsulfat mit einer spezifischen Oberfläche nach Blaine von 2.500 bis 3.500 cm²/g, bevorzugt 2.750 bis 3.250 cm²/g, besonders bevorzugt von etwa 3.000 cm²/g, eingesetzt wird. Das eingesetzte Calciumsulfat sollte einen Calciumsulfatgehalt von mindestens 90 Gew.-% aufweisen. Ein erfindungsgemäß bevorzugtes Calciumsulfat besitzt eine Reindichte von 2,5 bis 3,0 g/cm³, insbesondere 2,7 bis 2,9 g/cm³, und eine Schüttdichte von 800 bis 1.200 g/l, insbesondere 850 bis 1.150 g/l, vorzugsweise 900 bis 1.100 g/l.

Insbesondere handelt es sich bei dem erfindungsgemäßen anorganischen Bindemittelsysteme um a) Portlandzement, b) Tonerdezement, c) mindestens ein dreifach funktionelles Polyalkylenglykol, welches pro Molekül drei Hydroxylgruppen aufweist und ein gewichtsmittleres Molekulargewicht zwischen 100 und 20000 besitzt und d) Anhydrit. Besonders bevorzugt hat das System folgende Zusammensetzung: a) 10 bis 30 Gew.-% Portlandzement, b) 1 bis 10 Gew.-% Tonerdezement, c) 0,05 bis 5 Gew.-% mindestens ein dreifach funktionelles Polyalkylenglykol, welches pro Molekül drei Hydroxylgruppen aufweist und ein gewichtsmittleres Molekulargewicht zwischen 100 und 20000 besitzt, auf Basis von Trimethylolpropan oder Glycerin und Polyethylenglycol, Polypropylenglycol und/oder Polytetramethylenglycol und d) 0 bis 20 Gew.-%, insbesondere 2 bis 18 Gew.-% Anhydrit.

Zur Steuerung der Abbindezeit können als weitere Beschleuniger bzw. Verzögerer, insbesonder Hydroxide, anorganische und/oder organische Säuren und/oder deren Salze und Alkalicarbonate oder Mischungen dieser Verbindungen zugegeben werden. Insbesondere werden als weitere Beschleuniger bzw. Verzögerer Calciumhydroxid, Zitronensäure und/oder deren Salze, Lithium-, Natrium- und/oder Kaliumcarbonat oder Mischungen dieser Verbindungen zugegeben. Die Menge an Abbinderegler kann in weiten Bereichen variieren. Im Allgemeinen wird der Abbinderegler in Mengen von 0,001 bis 4 Gew.-%, insbesondere 0,01 bis 0,25 Gew.-%, bezogen auf das anorganische Bindemittelsystem eingesetzt. Dennoch kann es gegebenenfalls erforderlich sein von den vorgenannten Werten abzuweichen.

Insbesondere kann das erfindungsgemäße anorganische Bindemittelsystem weiterhin 20 bis 60 Gew.-% Quarzsand, 0,1 bis 2 Gew.-% eines weiteren Zementbeschleunigers, insbesondere Alkali- und/oder Erdalkalimetall-Hydroxid, bevorzugt Ca-Hydroxid und Alkali- und/oder Erdalkalimetallcarbonat, insbesondere Lithiumcarbonat und 0,1 bis 2 Gew.-% Zementverzögerer, insbesondere Polyhydroxycarbonsäuren und andere Polyhydroxyverbindungen enthalten.

Der Anteil an Füllstoffen im erfindungsgemäßen anorganischen Bindemittelsystem liegt bevorzugt bei 10 bis 85 Gew.-%. Bei den eingesetzten Füllstoffen handelt es sich insbesondere um Quarzsand, Quarzmehl, Kalkstein, Schwerspat, Calcit, Dolomit, Talkum, Kaolin, Glimmer und Kreide. Als Leichtfüllstoff können Perlit, Mineralschaum, Schaumperlen, Bims, Blähglas, Hohlglaskugeln und Calciumsilikat-Hydrat eingesetzt werden. Es können natürlich auch Mischungen der Füllstoffe eingesetzt werden.

Weiterhin kann das anorganische Bindemittelsystem als Füllstoff Kalksteinmehl enthalten, insbesondere in Mengen von 5 bis 40 Gew.-%, vorzugsweise 20 bis 35 Gew.-%, besonders bevorzugt 25 bis 35 Gew.-%, bezogen auf das anorganische Bindemittelsystem. Erfindungsgemäß bevorzugtes Kalksteinmehl enthält mindestens 90 Gew.-%, vorzugsweise mindestens 95 Gew.-%, Calciumcarbonat, bezogen auf das Kalksteinmehl. Besonders gute Ergebnisse werden mit einem Kalksteinmehl mit einer Schüttdichte von 800 bis 1.000 g/l, insbesondere 900 bis 950 g/l, erhalten. Im Rahmen der vorliegenden Erfindung bevorzugtes Kalksteinmehl besitzt eine spezifische Oberfläche nach Blaine von 3.500 bis 4.500 cm²/g, vorzugsweise 3.750 bis 4.250 cm²/g, besonders bevorzugt von etwa 4.000 cm²/g.

Bevorzugt enthält das System als Füllstoff Quarzsand, insbesondere in Mengen von 15 bis 85 Gew.-%, vorzugsweise 25 bis 65 Gew.-%, besonders bevorzugt 35 bis 60 Gew.-%, bezogen auf das anorganische Bindemittelsystem. Gemäß einer besonderen Ausführungsform der vorliegenden Erfindung wird ein Gemisch von Quarzsanden unterschiedlicher Korngrößen und/oder unterschiedlicher spezifischer Oberflächen nach Blaine eingesetzt. Insbesondere wird ein etwas feinkörnigerer Quarzsand mit einem etwas grobkörnigeren Quarzsand kombiniert. Erfindungsgemäß bevorzugter Quarzsand weist einen SiO₂-Gehalt von mehr als 95 Gew.-%, vorzugsweise von mehr als 98 Gew.-%, bezogen auf den Quarzsand auf. Erfindungsgemäß bevorzugter Quarzsand weist eine theoretische spezifische Oberfläche (Blaine) von mindestens 60 cm²/g, vorzugsweise mindestens 70 cm²/g, besonders bevorzugt mindestens 80 cm²/g, auf.

Weiterhin kann das anorganische Bindemittelsystem noch mindest eine latent hydraulische Feststoffkomponente wie Kaolin, Metakaolin, Schlacke, Flugasche, Microsilica, aktiviertem Ton (Puzzolan), Siliciumoxide, Aluminiumoxide enthalten. Diese werden ggf. in Mengen von 1 bis 15 Gew.-%, vorzugsweise 1 bis 5 Gew.-%, bezogen auf das anorganische Bindemittelsystem, eingesetzt.

Weiterhin kann vorgesehen sein, dass das anorganische Bindemittelsystem weitere Inhaltsstoffe und/oder Additive enthält, um die Anwendungseigenschaften zu optimieren. Solche Inhaltsstoffe bzw. Additive können beispielsweise ausgewählt sein aus der Gruppe Verflüssiger, redispergierbare Polymerpulver, Entschäumer, Stabilisierungsmittel, Wasserretentionsmittel, Verdicker, Verlaufsmittel, Entstaubungsmittel und Pigmente.

Beispielsweise kann das erfindungsgemäße anorganische Bindemittelsystem mindestens einen Verflüssiger enthalten, insbesondere in Mengen von 0,01 bis 5 Gew.-%, vorzugsweise 0,05 bis 2 Gew.-%, besonders bevorzugt 0,1 bis 0,5 Gew.-%, bezogen auf das anorganische Bindemittelsystem. Beispiele für bevorzugte Verflüssiger sind Verflüssiger auf der Basis von Lignosulfonaten, Casein, sulfonierten Naphthalin-Formaldehyd-Kondensaten, sulfonierten Melamin-Formaldehyd-Kondensaten und modifizierter Polycarboxylatethern. Insbesondere werden die Verflüssiger derart ausgewählt, dass sie den Wasserbedarf beim Anmachen reduzieren und zudem vorteilhafterweise auch zu einer besonders guten Frühfestigkeitsentwicklung führen bzw. diese fördern.

Weiterhin kann das erfindungsgemäße anorganische Bindemittelsystem zur Optimierung der Anwendungseigenschaften ein die rheologischen und/oder physikalischen Eigenschaften verbesserndes bzw. beeinflussendes Additiv enthalten. Dieses kann beispielsweise auf Basis eines in Wasser redispergierbaren Polymerpulvers, vorzugsweise auf Basis von Vinylacetat und Ethylen ausgebildet sein (Ethylen/Vinylacetat-Copolymer). Ein derartiges Additiv kann insbesondere in Mengen von 1 bis 15 Gew.-%, vorzugsweise 1 bis 5 Gew.-%, bezogen auf das anorganische Bindemittelsystem, eingesetzt werden.

Das erfindungsgemäße System kann mindestens einen Entschäumer enthalten, beispielsweise eine Kombination von flüssigen Kohlenwasserstoffen und amorpher Kieselsäure. Ein solcher Entschäumer kann insbesondere in Mengen von 0,001 bis 3 Gew.-%, vorzugsweise 0,05 bis 1 Gew.-%, bezogen auf das Gesamtsystem, eingesetzt werden.

Des Weiteren kann das anorganische Bindemittelsystem mindestens ein Stabilisierungsmittel enthalten. Solche Stabilisierungsmittel können beispielsweise ausgewählt sein aus Gummen (z. B. Diutan Gum) oder aber auf Basis von Cellulose oder Cellulosederivaten (z. B. Hydroxyethylcellulose) ausgebildet sein. Auch können verschiedene Stabilisierungsmittel miteinander kombiniert werden, z. B. Gummen einerseits und Cellulose oder Cellulosederivate andererseits. Wenn als Stabilisierungsmittel Gummen eingesetzt werden, können diese in Mengen von 0,001 bis 0,2 Gew.-%, vorzugsweise 0,03 bis 0,08 Gew.-%, bezogen auf das anorganische Bindemittelsystem, eingesetzt werden. Wenn als Stabilisierungsmittel Cellulose bzw. Cellulosederivate (z. B. Hydroxyethylcellulose) eingesetzt werden, können diese in Mengen von 0,001 bis 0,5 Gew.-%, vorzugsweise 0,05 bis 0,15 Gew.-%, bezogen auf das Gesamtsystem, eingesetzt werden.

Außerdem kann das erfindungsgemäße anorganische System mindestens einen Zusatz zur Einstellung des Wasserrückhaltevermögens enthalten. Als Wasserretentionsmittel kann insbesondere Methylcellulose in einer Menge von 0,5 bis 2 Gew.-%, vorzugsweise 0,8 bis 1,5 Gew.-%, in der Mischung vorhanden sein.

Schließlich sind bei einer bevorzugten Ausführungsform auch noch Verdickungsmittel enthalten, die bevorzugt aus der Reihe quellfähiger Schichtsilikate (z.B. Bentonite, Attapulgite, Kaolinite) und Polyacrylate oder Kombinationen hiervon ausgewählt sind, und vorzugsweise in einer Menge von 0,5 bis 2 Gew.-%, bezogen auf das anorganische Bindemittelsystem, eingesetzt werden.

Weiterhin können dem erfindungsgemäßen anorganischen Bindemittelsystem auch Pigmente zugesetzt werden, insbesondere aus der Reihe der Eisenoxide.

Werktrockenmörtel neigen besonders bei Umfüll- und Mischprozessen zu einer deutlichen Staubbildung. In einer bevorzugten Ausführungsform kann dem erfindungsgemäßen Werktrockenmörtel deshalb ein Entstaubungsmittel zugesetzt werden, wobei es sich bevorzugt um einen aliphatischen Kohlenwasserstoff handelt. Hinsichtlich der bevorzugten Entstaubungsmittel wird auch auf die DE 20 2006016797 Bezug genommen. Bevorzugt enthält das erfindungsgemäße anorganische Bindemittelsystem zwischen 30 und 60 Gew.-% Füllstoff, zwischen 10 und 30 Gew.-% Calcium-Silikat-Zement, zwischen 1 und 10 Gew.-% Calcium-Aluminat-Zement, zwischen 0,05 und 5 Gew.-% mindestens eines dreifach funktionellen Polyalkylenglykols, welches pro Molekül drei Hydroxylgruppen aufweist und ein gewichtsmittleres Molekulargewicht zwischen 100 und 20000 besitzt und ggf. zwischen 0,005 und 1 Gew.-% mindestens eines weiteren Beschleunigers und/oder Verzögerers und zwischen 0 und 20 Gew.-% Calciumsulfat.

In einer bevorzugten Ausführungsform wird das anorganische Bindemittelsystem als Spachtel-, Estrich- oder Ausgleichsmasse verwendet.

Weiterhin sieht die vorliegende Erfindung die Verwendung mindestens eines Polyalkylenglykols, welches pro Molekül drei Hydroxylgruppen aufweist und ein gewichtsmittleres Molekulargewicht zwischen 100 und 20000 besitzt, als Beschleuniger für ein zementäres System vor, welches die Komponenten a) Calcium-Silikat-Zement, b) Calcium-Aluminat-Zement und ggf. c) Calciumsulfat umfasst.

Bevorzugt handelt es sich bei dem mindestens dreifach funktionellen Polyalkylenglykol, insbesondere um Polyethylenglycol, Polypropylenglycol und/oder Polytetramethylenglycol, besonders bevorzugt um Polyethylenglycol, auf Basis Trimethylolpropan oder Glycerin. Bevorzugt liegt die mittlere molare Masse der dreifach funktionellen Polyalkylenglykole bei 200 bis 800 g/mol. Als Polyalkylenglykole eignen sich vorzugsweise die bei Raumtemperatur flüssigen Verbindungen.

Weiterhin wird mit der vorliegenden Erfindung ein Verfahren vorgesehen, bei dem das erfindungsgemäße anorganische Bindemittelsystem bei einer Temperatur zwischen 5 und 30 °C verarbeitet wird.

Insgesamt wird mit der vorliegenden Erfindung ein anorganisches Bindemittelsystem auf Basis von Calcium-Silikat-Zement, Calcium-Aluminat-Zement und ggf. Calciumsulfat zur Verfügung gestellt, welches sich durch eine gleichbleibende Topfzeit und Festigkeitsentwicklung auszeichnet, sowohl bei hohen Temperaturen, insbesondere zwischen 20 und 30 °C, als auch bei tiefen Temperaturen, insbesondere zwischen 15 und 5 °C.

Die nachfolgenden Beispiele verdeutlichen die Vorteile der vorliegenden Erfindung.

### Beispiele

**Spachtelmasse 1 :**

| | |
|---|---|
| Quarzsand 0,1 bis 1,2 mm | 71,8 Gew.% |
| Leichtfüllstoff | 2,0 Gew.% |
| Portlandzement CEM II 52,5 | 20 Gew.% |
| Tonerdezement | 2,0 Gew.% |
| Dispersionspulver | 1,0 Gew.% |
| Beschleuniger | 3,0 Gew.% |
| Verzögerer | 0,2 Gew.% |
| Anmachwassermenge: | 220 g/kg Pulver |

**Spachtelmasse 2:**

| | |
|---|---|
| Quarzsand 0,1 bis 1,2 mm | 71,6 Gew.% |
| Leichtfüllstoff | 2,0 Gew.% |
| Portlandzement CEM II 52,5 | 17 Gew.% |
| Tonerdezement | 2,0 Gew.% |
| Anhydrit | 3,0 Gew.% |
| Dispersionspulver | 1,0 Gew.% |
| Beschleuniger | 3,0 Gew.% |
| Verzögerer | 0,2 Gew.% |
| Anmachwassermenge: | 220 g/kg Pulver |

**Spachtelmasse 3:**

| | |
|---|---|
| Quarzsand 0,1 bis 1,2 mm | 69,3 Gew.% |
| Portlandzement CEM II 52,5 | 20 Gew.% |
| Tonerdezement | 3,0 Gew.% |
| Anhydrit | 3,0 Gew.% |
| Microsilika | 2,5 Gew.% |
| Dispersionspulver | 1,0 Gew.% |
| Beschleuniger | 1,0 Gew.% |
| Verzögerer | 0,2 Gew.% |
| Anmachwassermenge: | 180 g/kg Pulver |

### Anmischen:

Die jeweilige Spachtelmasse wird mit der angegebenen Anmachwassermenge und ggf. Pluriol A4TE (Pluriol A4TE der BASF SE ist ein dreifach funktionelles Polyethylenglykole auf Basis Glycerin. Es weist pro Molekül drei Hydroxylgruppen auf) mit Hilfe einer Bohrmaschine und einem M17 Scheibenrühren knollenfrei angemischt. Nach einer Reifezeit von 3 min wird der Mörtel nochmals von hand mit einer Kelle kurz durchmischt und die Prüfungen begonnen.

### Verarbeitungszeit:

Nach Anrühren mit der angegebenen Wassermenge wird der Verlauf der Spachtelmasse subjektiv alle 5 min geprüft. Dazu wird die angemischte Mörtel in ein Gefäß gegeben; Schichthöhe ca. 4 cm. Das Ende der Verarbeitungszeit ist erreicht, wenn die Spachtelmasse nach Durchstreifen mit einer Traufel nicht mehr zu einer homogenen Oberfläche zusammenläuft und eine Trennlinie sichtbar bleibt.

### Erstarrungsbeginn/-ende:

Die Erstarrungszeit des jeweils angerührten Mörtels wird mit dem Vicat-Verfahren nach DIN EN 196 Teil 3 ermittelt.

### Belegereife:

Der angerührte Mörtel wird in einer Schichtstärke von 2 cm auf einen nicht-saugenden Untergrund aufgebracht. Nach 24 h wird mit einem Radiergummi die Oberfläche mit mittlerem händischen Druck belastet und einer 360°-Drehung unterzogen. Die Belegereife ist erreicht, wenn keine Mörtelabplatzungen oder Mörtelabrieb mehr entstehen.

### Ergebnisse:

**Spachtelmasse 1:**

| Ohne Polyalkylenglykol | Verarbeitungszeit | Erstarrungsbeginn | Erstarrungsende | Belegereife |
|---|---|---|---|---|
| 23 °C | 30min | 35min | 55min | 90min |
| 10°C | 100min | 110min | 160min | 240min |

| Mit 1 Gew.-% Polyalkylenglykol (Pluriol A4TE) | Topfzeit | Erstarrungsbeginn | Erstarrungsende | Belegereife |
|---|---|---|---|---|
| 23 °C | 30min | 35min | 55min | 90min |
| 10°C | 50min | 60min | 100min | 140min |

**Spachtelmasse 2:**

| Ohne Polyalkylenglykol | Verarbeitungszeit | Erstarrungsbeginn | Erstarrungsende | Belegereife |
|---|---|---|---|---|
| 23 °C | 30min | 35min | 55min | 70min |
| 10°C | 80min | 115min | 185min | 255min |

| Mit 1 Gew.-% Polyalkylenglykol (Pluriol A4TE) | Verarbeitungszeit | Erstarrungsbeginn | Erstarrungsende | Belegereife |
|---|---|---|---|---|
| 23 °C | 30min | 35min | 55min | 70min |
| 10°C | 30min | 40min | 80min | 180min |

**Spachtelmasse 3:**

| Ohne Polyalkylenglykol | Verarbeitungszeit | Erstarrungsbeginn | Erstarrungsende | Belegereife |
|---|---|---|---|---|
| 23 °C | 30min | 35min | 55min | 70min |
| 5°C | 80min | 115min | 185min | 240min |

| Mit 1 Gew.-% Polyalkylenglykol (Pluriol A4TE) | Topfzeit Erstarrungsbeginn | | Erstarrungsende | Belegereife |
|---|---|---|---|---|
| 23 °C | 30min | 35min | 55min | 90min |
| 5°C | 60min | 70min | 100min | 140min |

## Patentansprüche

1. Anorganisches Bindemittelsystem enthaltend
a) Calcium-Silikat-Zement
b) Calcium-Aluminat-Zement
c) mindestens ein dreifach funktionelles Polyalkylenglykol, welches pro Molekül drei Hydroxylgruppen aufweist und ein gewichtsmittleres Molekulargewicht zwischen 100 und 20000 besitzt
d) ggf. Calciumsulfat,
wobei es sich bei dem anorganischen Bindemittelsystem um einen Werktrockenmörtel handelt.

2. Anorganisches Bindemittelsysteme nach Anspruch 1, **dadurch gekennzeichnet, dass** es sich um
a) Portlandzement
b) Tonerdezement
c) mindestens ein dreifach funktionelles Polyalkylenglykol, welches pro Molekül drei Hydroxylgruppen aufweist und ein gewichtsmittleres Molekulargewicht zwischen 100 und 20000 besitzt d) ggf. Anhydrit handelt.

3. Anorganisches Bindemittelsysteme nach Anspruch 1 oder 2, **dadurch gekennzeichnet, dass** es
a) 10 bis 30 Gew.-% Portlandzement
b) 1 bis 10 Gew.-% Tonerdezement
c) 0,05 bis 5 Gew.-% mindestens ein dreifach funktionelles Polyalkylenglykol, welches pro Molekül drei Hydroxylgruppen aufweist und ein gewichtsmittleres Molekulargewicht zwischen 100 und 20000 besitzt, auf Basis von Trimethylolpropan oder Glycerin und Polyethylenglycol, Polypropylenglycol und/oder Polytetramethylenglycol
d) 0 bis 20 Gew.-% Anhydrit
enthält.

4. Anorganisches Bindemittelsystem nach einem der Ansprüche 1 bis 3, **dadurch gekennzeichnet, dass** weiterhin
20 bis 60 Gew.-% Quarzsand
0,1 bis 4 Gew.-% eines weiteren Zementbeschleunigers,
0,1 bis 2 Gew.-% Zementverzögerer,
enthalten sind.

5. Anorganisches Bindemittelsystem nach einem der Ansprüche 1 bis 4, **dadurch gekennzeichnet, dass** mindestens ein weiteres Additiv aus der Reihe Verflüssiger, redispergierbare Polymerpulver, Entschäumer, Stabilisierungsmittel, Wasserretentionsmittel, Verdicker, Entstaubungsmittel, Beschleuniger, Verzögerer und Pigmente enthalten ist.

6. Anorganisches Bindemittelsystem nach einem der Ansprüche 1 bis 5, **dadurch gekennzeichnet, dass** als weitere Beschleuniger bzw. Verzögerer Hydroxide, anorganische und/oder organische Säuren und/oder deren Salze und Alkalicarbonate oder Mischungen dieser Verbindungen eingesetzt werden.

7. Anorganisches Bindemittelsystem nach einem der Ansprüche 1 bis 6, **dadurch gekennzeichnet, dass** als weitere Beschleuniger bzw. Verzögerer Calciumhydroxid, Zitronensäure und/oder deren Salze, Lithium-, Natrium- und/oder Kaliumcarbonat oder Mischungen dieser Verbindungen eingesetzt werden.

8. Anorganisches Bindemittelsystem nach einem der Ansprüche 1 bis 7, **dadurch gekennzeichnet, dass** das zementäre System als Füllstoff mindestens eine Verbindung aus der Reihe Quarzsand, Quarzmehl, Kalkstein, Schwerspat, Calcit, Dolomit, Talkum, Kaolin, Glimmer und Kreide enthält.

9. Anorganisches Bindemittelsystem nach einem der Ansprüche 1 bis 8, **dadurch gekennzeichnet, dass** das zementäre System zwischen 30 und 60 Gew.-% Füllstoff, zwischen 10 und 30 Gew.-% Calcium-Silikat-Zement, zwischen 1 und 10 Gew.-% Calcium-Aluminat-Zement, zwischen 0,05 und 5 Gew.-% mindestens eines dreifach funktionellen Polyalkylenglykols, welches pro Molekül drei Hydroxylgruppen aufweist und ein gewichtsmittleres Molekulargewicht zwischen 100 und 20000 besitzt und ggf. zwischen 0,005 und 1 Gew.-% mindestens eines weiteren Beschleunigers und/oder Verzögerers und zwischen 0 und 20 Gew.-% Calciumsulfat enthält.

10. Anorganisches Bindemittelsystem nach einem der Ansprüche 1 bis 9, **dadurch gekennzeichnet, dass** das zementäre System zwischen 1 und 15 Gew.-% einer latent hydraulischen Feststoffkomponente enthält.

11. Verwendung eines anorganischen Bindemittelsystems nach einem der Ansprüche 1 bis 10, als Spachtel-, Estrich- oder Ausgleichsmasse.

12. Verwendung mindestens eines Polyalkylenglykols, welches pro Molekül drei Hydroxylgruppen aufweist und ein gewichtsmittleres Molekulargewicht zwischen 100 und 20000 besitzt, als Beschleuniger für ein zementäres System, welches die Komponenten
a) Calcium-Silikat-Zement und
b) Calcium-Aluminat-Zement und ggf.
d) Calciumsulfat
umfasst.

13. Verwendung nach Anspruch 12, **dadurch gekennzeichnet, dass** es sich bei dem Polyalkylenglycol um Polyethylenglycol, Polypropylenglycol und/oder Polytetramethylenglycol handelt.

14. Verfahren, wobei das anorganische Bindemittelsystem nach einem der Ansprüche 1 bis 10 bei einer Temperatur zwischen 5 und 15°C verarbeitet wird.

## Claims

1. Inorganic binder system comprising
a) calcium silicate cement
b) calcium aluminate cement
c) at least one trifunctional polyalkylene glycol which has three hydroxyl groups per molecule and has a weight-average molecular weight between 100 and 20 000
d) optionally calcium sulphate,
wherein the inorganic binder system is a dry mix mortar.

2. Inorganic binder system according to Claim 1, **characterized in that** it comprises
a) Portland cement
b) alumina cement
c) at least one trifunctional polyalkylene glycol which has three hydroxyl groups per molecule and has a weight-average molecular weight between 100 and 20 000
d) optionally anhydrite.

3. Inorganic binder system according to Claim 1 or 2, **characterized in that** it comprises
a) 10 to 30% by weight of Portland cement
b) 1 to 10% by weight of alumina cement
c) 0.05 to 5% by weight of at least one trifunctional polyalkylene glycol which has three hydroxyl groups per molecule and has a weight-average molecular weight between 100 and 20 000, based on trimethylolpropane or glycerol and polyethylene glycol, polypropylene glycol and/or polytetramethylenglycol
d) 0 to 20% by weight of anhydrite.

4. Inorganic binder system according to any of Claims 1 to 3, **characterized in that**
20 to 60% by weight of quartz sand
0.1 to 4% by weight of a further cement accelerator
0.1 to 2% by weight of cement retardant
are additionally present.

5. Inorganic binder system according to any of Claims 1 to 4, **characterized in that** at least one further additive from the group of plasticizers, redispersible polymer powders, defoamers, stabilizers, water retention aids, thickeners, dedusting agents, accelerators, retardants and pigments is present.

6. Inorganic binder system according to any of Claims 1 to 5, **characterized in that** the further accelerators or retardants used are hydroxides, inorganic and/or organic acids and/or salts thereof, and alkali metal carbonates, or mixtures of these compounds.

7. Inorganic binder system according to any of Claims 1 to 6, **characterized in that** the further accelerators or retardants used are calcium hydroxide, citric acid and/or salts thereof, lithium carbonate, sodium carbonate and/or potassium carbonate, or mixtures of these compounds.

8. Inorganic binder system according to any of Claims 1 to 7, **characterized in that** the cementious system comprises, as a filler, at least one compound from the group of quartz sand, quartz flour, limestone, heavy spar, calcite, dolomite, talc, kaolin, mica and chalk.

9. Inorganic binder system according to any of Claims 1 to 8, **characterized in that** the cementious system comprises between 30 and 60% by weight of filler, between 10 and 30% by weight of calcium silicate cement, between 1 and 10% by weight of calcium aluminate cement, between 0.05 and 5% by weight of at least one trifunctional polyalkylene glycol which has three hydroxyl groups per molecule and has a weight-average molecular weight between 100 and 20 000 and optionally between 0.005 and 1% by weight of at least one further accelerator and/or retardant and between 0 and 20% by weight of calcium sulphate.

10. Inorganic binder system according to any of Claims 1 to 9, **characterized in that** the cementious system comprises between 1 and 15% by weight of a latently hydraulic solid component.

11. Use of an inorganic binder system according to any of Claims 1 to 10, as spackling paste, screed material or levelling compound.

12. Use of at least one polyalkylene glycol which has three hydroxyl groups per molecule and has a weight-average molecular weight between 100 and 20 000 as an accelerator for a cementious system, which comprises the components
a) calcium silicate cement and
b) calcium aluminate cement and optionally
d) calcium sulphate.

13. Use according to Claim 12, **characterized in that** the polyalkylene glycol is polyethylene glycol, polypropylene glycol and/or polytetramethylene glycol.

14. Process wherein the inorganic binder system according to any of Claims 1 to 10 is processed at a temperature between 5 and 15°C.

## Revendications

1. Système de liant inorganique, contenant :
a) un ciment de silicate de calcium,
b) un ciment d'aluminate de calcium,
c) au moins un polyalkylène glycol trifonctionnel, qui comprend trois groupes hydroxyle par molécule et qui présente un poids moléculaire moyen en poids compris entre 100 et 20 000,
d) éventuellement du sulfate de calcium,
le système de liant inorganique consistant en un mortier sec prêt à l'emploi.

2. Système de liant inorganique selon la revendication 1, **caractérisé en ce qu'**il s'agit
a) de ciment Portland,
b) de ciment alumineux,
c) d'au moins un polyalkylène glycol trifonctionnel, qui comprend trois groupes hydroxyle par molécule et qui présente un poids moléculaire moyen en poids compris entre 100 et 20 000,
d) éventuellement d'une anhydrite.

3. Système de liant inorganique selon la revendication 1 ou 2, **caractérisé en ce qu'**il contient :
a) 10 à 30 % en poids de ciment Portland,
b) 1 à 10 % en poids de ciment alumineux,
c) 0,05 à 5 % en poids d'au moins un polyalkylène glycol trifonctionnel, qui comprend trois groupes hydroxyle par molécule et qui présente un poids moléculaire moyen en poids compris entre 100 et 20 000, à base de triméthylolpropane ou de glycérine et de polyéthylène glycol, de polypropylène glycol et/ou de polytétraméthylène glycol,
d) 0 à 20 % en poids d'une anhydrite.

4. Système de liant inorganique selon l'une quelconque des revendications 1 à 3, **caractérisé en ce qu'**il contient en outre :
20 à 60 % en poids de sable quartzeux,
0,1 à 4 % en poids d'un autre accélérateur de ciment,
0,1 à 2 % en poids d'un retardateur de ciment.

5. Système de liant inorganique selon l'une quelconque des revendications 1 à 4, **caractérisé en ce qu'**il contient au moins un autre additif de la série constitué par les agents de liquéfaction, les poudres polymères redispersibles, les agents antimousse, les stabilisateurs, les agents de rétention de l'eau, les épaississants, les agents dépoussiérants, les accélérateurs, les retardateurs et les pigments.

6. Système de liant inorganique selon l'une quelconque des revendications 1 à 5, **caractérisé en ce que** des hydroxydes, des acides inorganiques et/ou organiques et/ou leurs sels et des carbonates alcalins ou des mélanges de ces composés sont utilisés en tant qu'accélérateurs ou retardateurs supplémentaires.

7. Système de liant inorganique selon l'une quelconque des revendications 1 à 6, **caractérisé en ce que** de l'hydroxyde de calcium, de l'acide citrique et/ou ses sels, du carbonate de lithium, de sodium et/ou de potassium ou des mélanges de ces composés sont utilisés en tant qu'accélérateurs ou retardateurs supplémentaires.

8. Système de liant inorganique selon l'une quelconque des revendications 1 à 7, **caractérisé en ce que** le système cimentaire contient en tant que charge au moins un composé de la série constituée par le sable quartzeux, la farine de quartz, la pierre calcaire, le spath pesant, la calcite, la dolomite, le talc, le kaolin, le mica et la craie.

9. Système de liant inorganique selon l'une quelconque des revendications 1 à 8, **caractérisé en ce que** le système cimentaire contient entre 30 et 60 % en poids de charge, entre 10 et 30 % en poids de ciment de silicate de calcium, entre 1 et 10 % en poids de ciment d'aluminate de calcium, entre 0,05 et 5 % en poids d'au moins un polyalkylène glycol trifonctionnel, qui comprend trois groupes hydroxyle par molécule et qui présente un poids moléculaire moyen en poids compris entre 100 et 20 000, et éventuellement entre 0,005 et 1 % en poids d'au moins un autre accélérateur et/ou retardateur, et entre 0 et 20 % en poids de sulfate de calcium.

10. Système de liant inorganique selon l'une quelconque des revendications 1 à 9, **caractérisé en ce que** le système cimentaire contient entre 1 et 15 % en poids d'un composant solide hydraulique latent.

11. Utilisation d'un système de liant inorganique selon l'une quelconque des revendications 1 à 10 en tant qu'enduit, chape ou produit d'égalisation.

12. Utilisation d'au moins un polyalkylène glycol trifonctionnel, qui comprend trois groupes hydroxyle par molécule et qui présente un poids moléculaire moyen en poids compris entre 100 et 20 000, en tant qu'accélérateur pour un système cimentaire, qui comprend les composants suivants :
a) un ciment de silicate de calcium et
b) un ciment d'aluminate de calcium, et éventuellement
d) du sulfate de calcium.

13. Utilisation selon la revendication 12, **caractérisée en ce que** le polyalkylène glycol consiste en le polyéthylène glycol, le polypropylène glycol et/ou le polytétraméthylène glycol.

14. Procédé dans lequel le système de liant inorganique selon l'une quelconque des revendications 1 à 10 est usiné à une température comprise entre 5 et 15 °C.
